# EUROPÄISCHE PATENTSCHRIFT

(11) **EP 1 920 328 B1**
(45) Veröffentlichungstag und Bekanntmachung des Hinweises auf die Patenterteilung: **10.10.2012**
(21) Anmeldenummer: 06777008.1
(22) Anmeldetag: 22.08.2006
(51) Int. Cl.: G06F 9/445, G06F 9/455

(54) **OPERATIONSCODE-UMSCHALTUNG**
OPERATION CODE SWITCHING
COMMUTATION DE CODE D'OPERATION

(30) Priorität: 23.08.2005 DE 102005039839
(43) Veröffentlichungstag der Anmeldung: 14.05.2008
(73) Patentinhaber: Giesecke & Devrient GmbH, 81677 München (DE)
(72) Erfinder: STOCKER, Thomas, 81739 München (DE)
(86) Internationale Anmeldenummer: PCT/EP2006/008239
(87) Internationale Veröffentlichungsnummer: WO 2007/022953

(56) Entgegenhaltungen:
- WO-A-01/97027
- WO-A-03/014921
- DE-A1-102004 060 548
- KRISHNASWAMY A ET AL: "Profile guided selection of ARM and thumb instructions" SIGPLAN NOTICES, ASSOCIATION FOR COMPUTING MACHINERY, NEW YORK, NY, US, Bd. 37, Nr. 7, Juli 2002 (2002-07), Seiten 56-64, XP002309544 ISSN: 0362-1340
- CLAUSEN L R ET AL: "JAVA BYTECODE COMPRESSION FOR LOW-END EMBEDDED SYSTEMS" ACM TRANSACTIONS ON PROGRAMMING LANGUAGES AND SYSTEMS, ACM, NEW YORK, NY, US, Bd. 22, Nr. 3, Mai 2000 (2000-05), Seiten 471-489, XP008050340 ISSN: 0164-0925

## Beschreibung

Die vorliegende Erfindung betrifft ein Verfahren zum Ausführen von Applikationen auf einem portablen Datenträger mit einem Prozessor und einen derartigen Datenträger, insbesondere eine Chipkarte, eine sichere Multimediakarte, ein USB-Speichermedium, eine Mobilfunkkarte oder dergleichen.

Vielfach verwenden heutige Computersysteme und mit einem Prozessor ausgestattete portable Datenträger aus Gründen einer flexibleren und effizienteren Softwareentwicklung und -portierung einen Interpreteransatz. Dabei werden auszuführende Applikationen dem Computer/Datenträger nicht in direkt von dem Prozessor ausführbarem Maschinencode bereitgestellt, sondern in einer gegenüber dem hardwarespezifischen Maschinencode abstrakteren interpretierbaren Sprache, die von einem auf dem Computer/Datenträger installierten und vom Prozessor ausführbaren Interpreterprogramm (dem Interpreter) durch Interpretation ausgeführt werden kann. Beim Ausführen einer derartigen Applikation werden die Instruktionen der Applikation von dem Interpreter zur Laufzeit schrittweise decodiert und in elementare, unmittelbar auszuführende Maschinenoperationen umgesetzt. Der Funktionsumfang und die Ausführungseffizienz einer interpretierbaren Sprache ergibt sich dann nicht unmittelbar aus dem Operationsumfang des Prozessors, sondern aus den interpretierfähigen Instruktionen und deren Umsetzung in Maschinenoperationen.

Bei einigen interpretierbaren Sprachen, wie z. B. den objektorientierten Sprachen Java und C-Sharp, wird eine Quellcode-Applikation nicht direkt interpretiert, sondern zunächst in eine plattformunabhängige, von einem Interpreter ausführbare Operationscodesprache vorkompiliert (bei Java "Bytecode" und bei u.a. C-Sharp "CIL" genannt). Die Instruktionen einer Operationscodesprache umfassen Operationscodes, über die der Interpreter unter Verwendung einer Operationscodetabelle einer Instruktion elementare Maschinenoperationen zuordnet.

Da der Umfang und die maschinensprachliche Umsetzung der Instruktionen einer Operationscodesprache in der Regel auf bestimmte Anwendungsszenarien ausgerichtet ist und der Entwickler einer Applikation zumindest in der Wahl der Operationscodesprache nicht frei ist, besteht die Schwierigkeit, dass eine zu entwickelnde Applikation in der zur Verfügung stehenden Operationscodesprache im Hinblick auf übliche Effizienzkriterien möglicherweise nicht optimal ausgeführt werden kann oder dass es keine Operationscodesprache gibt, in der jeder Aspekt einer Applikation hinreichend effizient realisiert werden kann.

Das Bereitstellen mehrerer Interpreter kann dieses Problem nicht lösen, da man hier selbst bei freier Wahl der Operationscodesprache immer auch die Schwächen dieser Sprache in Kauf nehmen muss. Darüber hinaus ist es insbesondere bei im Speicherplatz beschränkten portablen Datenträgern wie z. B. Chipkarten oder Mobilfunkkarten nicht wünschenswert, weitere Interpreter zu installieren.

Die EP 1 221 091 B1 beschreibt ein Verfahren zum Laden von objektorientierten Computerprogrammen, bei dem der Prozess des Ladens und Bindens insbesondere für mobile Datenträger auf der Methodenebene ressourcensparend durchgeführt werden kann, da Klassendefinitionen oder Klassenbibliotheken nicht vollständig geladen werden müssen. In dem Artikel "Profile guided Selection of ARM and Thumb instructions" wird beschrieben, wie optimierter, nativer Code für einen Prozessor erzeugt werden kann, der sowohl ARM 32 Bit-Befehle als auch die üblichen nativen 16 Bit-Befehle als elementare Maschinenoperationen unterstützt. DE 10 2004 060 548 A1 zeigt eine virtuelle Maschine für tragbare Datenträger dessen Interpreter in seiner funktionsweise umschaltbar ist. Insbesondere können somit auf demselben Datenträger Programme ausgeführt werden unabhängig davon, ob sie für eine neue oder eine alte Interpreterversion vorgesehen sind.

Es ist die Aufgabe der vorliegenden Erfindung, ein Verfahren und einen Datenträger bereitzustellen, mit denen eine Applikation ressourcensparend ausgeführt werden kann.

Diese Aufgabe wird erfindungsgemäß durch ein Verfahren und einen Datenträger mit den Merkmalen der unabhängigen Ansprüche gelöst. In davon abhängigen Ansprüchen sind vorteilhafte Ausgestaltungen und Weiterbildungen angegeben.

Erfindungsgemäß umfasst ein portabler Datenträger einen Prozessor zur Ausführung von Systemprogrammen und Applikationen sowie eine Vorrichtung zum Bilden und Ausführen einer Applikation, die zum Zweck ihrer Ausführung aus zumindest zwei in unterschiedlichen Operationscodesprachen vorliegenden Ausgangsvarianten der Applikation gebildet wird.

Dadurch lassen sich auszuführende Applikationen bilden, die aus mehr als einer Operationscodesprache bestehen. Einerseits kann dadurch der Umfang der zugrundeliegenden Operationscodesprachen auf die von ihnen effizient zu realisierenden Funktionen beschränkt werden, so dass eine ressourcensparende Implementierung mehrerer Operationscodesprachen auf einem Datenträger ermöglicht wird. Andererseits kann für die auszuführende Applikation zur Realisierung einer bestimmten Funktionalität genau diejenige Operationscodesprache ausgewählt werden, die dafür am besten geeignet ist. Im Ergebnis ergibt sich eine ausführbare Applikation, die die Vorzüge der Operationscodesprachen der bereitgestellten Ausgangsvarianten integriert und insofern gegenüber den Ausgangsvarianten optimiert ist.

Die aus den Ausgangsvarianten gebildete Applikation kann hierbei einerseits stückweise aus ausgewählten Programmsequenzen der Ausgangsvarianten durch Synthetisieren gebildet werden, wobei es auch möglich ist, dass bei diesem Syntheseprozess im Ausnahmefall nur Programmsequenzen einer der Ausgangsvarianten ausgewählt werden und im Ergebnis die gebildete Applikation im wesentlichen aus dieser Ausgangsvariante besteht. Andererseits kann die Applikation auch dadurch gebildet werden, dass eine der bereitgestellten Ausgangsvarianten als auszuführende Applikation vollständig auswählt wird. In jedem Falle wird die Applikation aus den Ausgangsvarianten derart gebildet, dass sie durch die Vorrichtung unmittelbar ausgeführt werden kann. Die Ausgangsvarianten der Applikation und die aus ihnen gebildete auszuführende Applikation sind dann funktional gleichwirkend.

Im Falle einer echten Synthese der Applikation aus den Ausgangsvarianten werden Programmsequenzen aus jeweils einander entsprechenden Programmsequenzen der Ausgangsvarianten für die zu bildende Applikation ausgewählt. Eine Programmsequenz kann hierbei je nach Aufbau und Zweck der Ausgangsvarianten und/ oder der entsprechenden Operationscodesprachen aus einer einzelnen Instruktion, einer Folge von Instruktionen, einer Unter- oder Bibliotheksroutine, einem Modul oder einer Methode mit einer jeweils homogenen Operationscodesprache bestehen.

Die Auswahl einer Programmsequenz aus einander entsprechenden Programmsequenzen der jeweiligen Ausgangsvarianten oder die vollständige Auswahl einer der bereitgestellten Ausgangsvarianten erfolgt anhand vorgegebener Kriterien, wobei diese Kriterien z. B. das Laufzeitverhalten der Programmsequenzen bzw. Ausgangsvarianten oder ihren Speicherplatzbedarf betreffen. Darüber hinaus kann auch der für die Lösung eines bestimmten Problems von einer Operationscodesprache zur Verfügung gestellte Funktionsumfang ein Kriterium für die Auswahl von Programmsequenzen sein. Die Synthese der auszuführenden Applikation kann im schrittweisen Abarbeiten und Vergleichen der einander entsprechenden Programmsequenzen der funktional gleichwirkenden Ausgangsvarianten bestehen und eine ebenfalls funktional gleichwirkende Applikation ergeben.

Die Vorrichtung des Datenträgers kann einen auf dem Datenträger installierten und von dem Prozessor ausführbaren Interpreter umfassen, der so ausgestaltet ist, dass er die Operationscodesprachen aller bereitgestellten Ausgangsvarianten interpretieren kann. Dies kann insbesondere dadurch erreicht werden, dass der Interpreter für jede der Operationscodesprachen Zugriff auf korrespondierende Operationscodetabellen hat, die auf dem Datenträger vorhanden sind. Beim Interpretieren einer gebildeten Applikation greift der Interpreter beim Umsetzen einer Instruktion oder Programmsequenz in Maschinenspracheoperationen jeweils auf die Operationscodetabelle derjenigen Operationscodesprache zu, zu der die Instruktion oder Programmsequenz gehört. Da die jeweils zu interpretierende Operationscodesprache innerhalb der auszuführenden Applikation wechseln kann, schaltet der Interpreter zwischen den zu verwendenden Operationscodetabellen abhängig von der jeweils zu interpretierenden Programmsequenz um.

Damit die Applikation bei einem Wechsel der Operationscodesprache fehlerfrei weiterinterpretiert werden kann, ist es vorteilhaft, dass die internen Strukturen der jeweiligen Ausgangsvarianten und/oder der aus ihnen in die auszuführende Applikation übernommenen Programmsequenzen übereinstimmen. Dies kann beispielsweise durch eine gemeinsame Speicherverwaltung sichergestellt werden, die z. B. Funktions- und Methodenaufrufe, Datenstrukturen und Schnittstellen für die verschiedenen Operationscodesprachen harmonisiert.

Das Umschalten der zur Interpretation jeweils zu verwendenden Operationscodetabelle kann dadurch veranlasst werden, dass beim Bilden der ausführbaren Applikation vorgegebene Sprachcodes in den Programmcode der auszuführenden Applikation einfügt werden, die dem Interpreter bei der Interpretation einer Instruktion oder Programmsequenz die zu verwendende Operationscodetabelle angeben.

Alternativ kann die vom Interpreter zu verwendende Operationscodetabelle auch anhand einer Strukturinformation bestimmt werden, die den Verwaltungsdaten der internen Struktur einer zu interpretierenden Programmsequenz entnommen werden kann.

Üblicherweise umfasst die Vorrichtung eines mit einem Prozessor ausgestatteten Datenträgers auch einen vom Prozessor ausführbaren Lader zum Laden auszuführender Applikationen in einen Speicher des Datenträgers, vorzugsweise unmittelbar in den Arbeitsspeicher des Prozessors. Zusammen mit dem Interpreter ergeben sich dann prinzipiell zwei alternative Möglichkeiten, die Funktionalitäten der Vorrichtung des Bildens und Ausführens der Applikation zu realisieren:
Einerseits kann das Bilden der Applikation von dem Lader realisiert werden, indem er die auszuführende Applikation während des Prozesses des Ladens aus den bereitgestellten Ausgangsvarianten bildet. Die gebildete Applikation kann anschließend vom Interpreter ausgeführt werden. Falls die Ausgangsvarianten bereits auf dem Datenträger bereitliegen, kann der Lader diese direkt ansprechen und die auszuführende Applikation bilden. Es ist aber auch denkbar, dass die Ausgangsvarianten auf einem externen Computer oder Server vorliegen und der Lader über eine geeignete Datenkommunikationsverbindung direkt auf diese zugreifen kann und die daraus gebildete auszuführende Applikation in einen Speicher des Datenträgers zum späteren oder unmittelbaren Ausführen durch den Interpreter ablegt, ohne das die Ausgangsvarianten auf dem Datenträger gespeichert werden.

Andererseits ist es auch möglich, das Bilden der Applikation als Funktion des Interpreters zu realisieren, so dass der Lader zunächst die bereitstehenden Ausgangsvarianten in den Arbeitsspeicher lädt und der Interpreter aus diesen nunmehr bereitstehenden Ausgangsvarianten die auszuführende Applikation schrittweise bildet und unmittelbar ausführt. Falls die auszuführende Applikation aus geeigneten Programmsequenzen der Ausgangsvarianten synthetisiert wird, können diese direkt nach ihrer Auswahl interpretiert werden, ohne dass die auszuführende Applikation jemals vollständig in einem Speicher vorliegt. Die auszuführende Applikation wird dann lediglich durch die Abarbeitungsreihenfolge der jeweils ausgewählten Ausgangsvarianten repräsentiert.

Bei einer bevorzugten Ausführungsform der vorliegenden Erfindung ist auf dem portablen Datenträger ein Java-System oder ein für Chipkarten geeignetes Java-Card-System installiert. Die unterschiedlichen Operationscodesprachen sind dann jeweils Java-Bytecode-Formate, wie z. B. das von einem Java-Compiler erzeugte Java-CLASS-Format und/ oder das von einem Java-Card-Konvertierer erzeugte Java-CAP-Format.

Um eine Applikation interpretieren zu können, die aus diesen unterschiedlichen Java-Bytecode-Formaten bestehende Programmsequenzen umfasst, ist es vorteilhaft, dass die Objektstrukturen der jeweils zugrunde liegenden Ausgangsvarianten übereinstimmen. Bei einer auf dem Datenträger installierten virtuellen Java-Maschine oder Java-Card-Maschine kann ein erfindungsgemäß ausgestalteter Lader und/ oder Interpreter in die virtuelle Maschine integriert sein.

Es ist nicht nötig, dass die Ausgangsvarianten in jeweils separaten Programmdateien vorliegen, sondern sie können auch in einer einzigen Datei zusammengefasst sein.

Besonders bevorzugt handelt es sich bei dem portablen Datenträger um eine Chipkarte, eine Smart-Card, eine sichere Multimediakarte, ein USB-Speichermedium, eine Mobilfunkkarte oder dergleichen.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen
- Figur 1: eine Chipkarte mit Prozessor und einem installierten Java-Card-System;
- Figur 2: ein Flussdiagramm eines erfindungsgemäßen Verfahrens;
- Figur 3: eine schematische Darstellung einer aus zwei Ausgangsvarianten gebildeten Applikation;
- Figur 4: eine erste Ausführungsform der Erfindung, bei der das Bilden der auszuführenden Applikation durch einen Lader der in Figur 1 dargestellten Chipkarte realisiert wird; und
- Figur 5: eine zweite Ausführungsform der Erfindung, bei der das Bilden der auszuführenden Applikation durch einen Interpreter der in Figur 1 dargestellten Chipkarte realisiert wird.

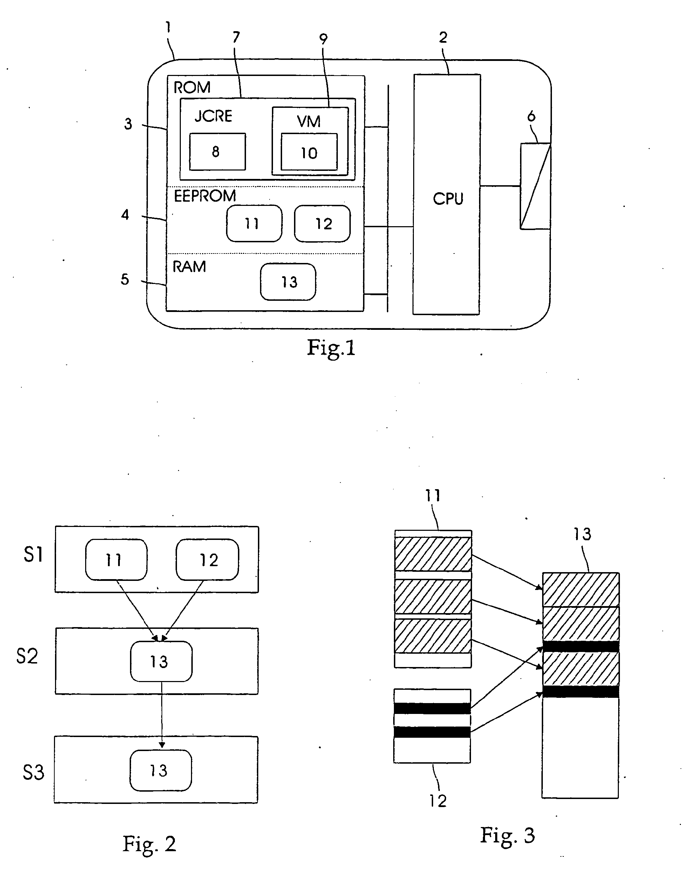

Figur 1 zeigt eine herkömmliche Chipkarte 1 mit Prozessor - eine sogenannte Smart-Card - mit dem üblichen Aufbau bestehend aus dem Prozessor 2, einem permanenten ROM-Speicher 3, einem wiederbeschreibbaren EEPROM-Speicher 4, einem flüchtigen RAM-Arbeitsspeicher 5 und einer Datenkommunikationsschnittstelle 6. Auf der Chipkarte 1 ist ein Java-Card-System 7, 8, 9, 10 installiert, das die wesentlichen Chipkartenfunktionen bereitstellt und eine Möglichkeit bietet, plattformunabhängige Java-Bytecode-Applikationen 11,12,13 auf der Chipkarte 1 auszuführen. Das Java-Card-System 7, 8, 9,10 umfasst mehrere Komponenten, von denen die Java-Laufzeitumgebung 7 mit einem Lader 8 und einer virtuellen Java-Card-Maschine 9 mit einem Interpreter 10 ausgestattet ist, so dass die Java-Laufzeitumgebung 7 als Betriebssystem der Chipkarte 1 angesehen werden kann. Die genannten Komponenten residieren üblicherweise im ROM-Speicher 3 der Chipkarte 1, da sie Systemprogramme sind und insofern über die gesamte Lebensdauer der Chipkarte 1 unverändert bleiben.

Obwohl die Figuren sich auf die Ausführungsformen der Erfindung beziehen, die eine Chipkarte mit einem Java-System umfassen, ist die Erfindung nicht darauf beschränkt, sondern ist prinzipiell auch auf beliebige Rechnersysteme anwendbar, die Operationscodesprachen ausführen können, so z.B. auch Microsofts .NET mit CLS/CIL.

Bei der Ausführung der Applikationen 11,12,13 auf der Chipkarte 1 durch den Prozessor 2 wirken der Lader 8 und der Interpreter 10, die beide vom Prozessor 2 ausführbare Softwarekomponenten repräsentieren, zusammen, indem der Lader 8 eine auszuführende Applikation 11,12,13 oder zu bindende Bibliotheksroutinen, Methoden oder Klassen in den Arbeitsspeicher 5 der Chipkarte 1 lädt, wo der Interpreter 10 auf sie zugreift und sie zur Ausführung interpretiert. Statt des Interpreters 10 ist es je nach Auslegung des Java-Systems auch möglich, einen Just-in-time-Compiler zur Ausführung von Applikationen zu verwenden oder Maschinensprache-Applikationen direkt von einem Java-Chip ausführen zu lassen.

Die Interpretation von einer in den Arbeitsspeicher 5 geladenen ausführbaren Applikation 13 wird in der Regel dadurch durchgeführt, dass die Instruktionen der Applikation 13 schrittweise von dem Interpreter 10 decodiert und mittels einer passenden Operationscodetabelle in unmittelbar ausführbare Maschinenoperationen umgesetzt werden. Die Operationscodetabelle bildet dabei die Operationscodes einer Instruktion der Applikation 13 auf die zur Realisierung dieser Instruktion auszuführenden elementaren Maschinenoperationen ab. Insofern definiert die Operationscodetabelle einerseits den Sprachumfang einer Operationscodesprache und andererseits die Effizienz der Umsetzung dieser Instruktionen.

Da sich Operationscodesprachen sowohl in ihrem Funktionsumfang als auch in der Wirkungsweise und Effizienz ihrer Instruktionen unterscheiden können, kann es sinnvoll sein, in Abhängigkeit von der Natur des mit einer Applikation zu lösenden Problems verschiedene Operationscodesprachen zu nutzen. Da eine Applikation jedoch üblicherweise sehr unterschiedliche Funktionen nutzt um vielfältige Teilprobleme zu lösen, werden erfindungsgemäß mehrere Operationscodesprachen innerhalb einer Applikation 13 verwendet, abhängig von der jeweiligen Struktur von Programmsequenzen oder Unterroutinen der Applikation 13. Aus diesem Grund stellt die vorliegende Erfindung eine Möglichkeit bereit, aus zwei bereitgestellten Ausgangsvarianten 11, 12 der Applikation 13, die in unterschiedlichen Operationscodesprachen vorliegen, eine ausführbare Applikation 13 zu bilden, die ausgewählte Programmsequenzen aus allen für diesen Zweck bereitgestellten Ausgangsvarianten 11,12 umfassen und insofern aus verschiedenen Operationscodesprachen bestehen kann.

Figur 2 zeigt ein grobes Ablaufschema des erfindungsgemäßen Verfahrens. In Schritt S1 werden wenigstens zwei Ausgangsvarianten 11,12 einer Applikation 13 bereitgestellt, die jeweils in einer verschiedenen Operationscodesprache vorliegen, während aus den bereitgestellten Ausgangsvarianten 11, 12 in Schritt S2 eine ausführbare Applikation 13 gebildet wird, die in Schritt S3 ausgeführt wird.

Das Bildens einer ausführbaren Applikation 13 aus funktional gleichwirkenden Ausgangsvarianten 11, 12 in Schritt S2 eröffnet die Möglichkeit, die Vorteile verschiedener Operationscodesprachen in einer einzelnen ausführbaren Applikation 13 zu integrieren, indem jeweils diejenigen Programmsequenzen aus den Ausgangsvarianten 11, 12 für die ausführbare Applikation 13 ausgewählt werden, die gemäß vorgegebener Kriterien, wie z. B. Laufzeitverhalten oder Speicherbedarf, den jeweils entsprechenden Programmsequenzen der anderen Ausgangsvarianten 12, 11 überlegen sind. Eine derartige Synthese der Applikation 13 aus Programmsequenzen der Ausgangsvarianten 11, 12 ist in Figur 3 schematisch dargestellt.

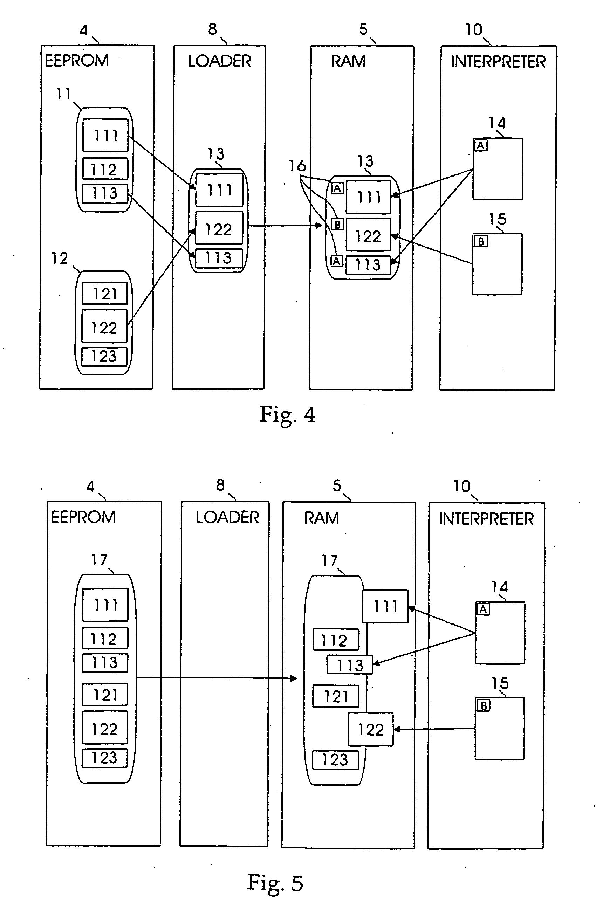

Ebenso kann aber auch eine der Ausgangsvarianten 11, 22 vollständig als auszuführende Applikation 13 ausgewählt werden. Diese umfasst dann zwar nur eine der möglichen Operationscodesprachen, ihre Auswahl ist aber auch ein Ergebnis einer vorhergehenden Analyse der Ausgangsvarianten 11, 12 hinsichtlich vorgegebener Kriterien, insbesondere also das Ergebnis einer Laufzeit- und/oder Speicherplatzabschätzung. Die sich aus diesem Grundschema ergebenden Ausführungsalternativen werden im folgenden anhand der Figuren 4 und 5 am Beispiel der in Figur 1 illustrierten Chipkarte mit installiertem Java-Card-System beschrieben.

Im Szenario eines Java-Systems oder Java-Card-Systems können mittels eines Java-Compilers und/oder eines Java-Konvertierers aus einem für eine bestimmte Applikation entwickelten Quellprograrnm unterschiedliche Ausgangsvarianten in unterschiedlichen Operationscodesprachen erzeugt werden. Solche Operationscodesprachen im Zusammenhang mit Java sind beispielsweise das von einem Java-Compiler erzeugte CLASS-Format oder das von einem Java-Konvertierer als Off-Card-Komponente der virtuellen Java-Card-Maschine erzeugte CAP-Format. In diesem Zusammenhang könnte es auch möglich sein, dass ein externer Java-Compiler ein Java-Quellprogramm direkt in verschiedene von der virtuellen Maschine 9 bzw. deren Interpreter 10 zu interpretierende Operationscodesprachen übersetzt, z.B. CLASS und CAP, und diese in einer gemeinsamen Datei bereitstellt.

Figur 4 illustriert eine erste bevorzugte Ausführungsform der vorliegenden Erfindung, bei der der Lader 8 aus den im EEPROM-Speicher 4 der Chipkarte 1 bereitgestellten, in unterschiedlichen Operationscodesprachen vorliegenden Ausgangsvarianten 11, 12 eine ausführbare Applikation 13 bildet. Die Ausgangsvarianten 11 liegt hierbei im Java-CLASS-Format vor und umfasst die Programmsequenzen 111,112 und 113, während die Ausgangsvariante 12 im Java-CAP-Format vorliegt und die Programmsequenzen 121, 122 und 123 umfasst.

Als Variante der in Figur 4 dargestellten Ausführungsform ist es auch denkbar, dass die Ausgangsvarianten 11,12 nicht im EEPROM-Speicher 4 der Chipkarte 1 zum Bilden der auszuführenden Applikation 13 bereitliegen, sondern extern auf einem Entwicklungsrechner oder Server. Der Lader greift dann nicht auf den EEPROM-Speicher 4 zu, sondern besitzt über die Datenkommunikationsschnittstelle 6 einen Zugriff auf die extern bereitgestellten Ausgangsvarianten 11,12, so dass beim Bilden der Applikation 13 diese auch auf die Chipkarte 1 geladen wird. Die Ausgangsvarianten 11, 12 werden dann nicht auf die Chipkarte 1 geladen, so dass lediglich die aus ihnen gebildete Applikation 13 auf der Chipkarte 1 vorliegt.

Zu der üblichen Aufgabe eines Laders 8, auszuführende Applikationen dynamisch zu laden und eventuell gegen referenzierte Routinen zu binden, kommt bei dem erfindungsgemäßen Lader 8 der Ausführungsform der Figur 4 die Funktionalität des Bildens der synthetisierten bzw. ausgewählten Applikation 13 hinzu. Im Beispiel der Figur 4 synthetisiert der Lader 8 aus den bereitgestellten Ausgangsvarianten 11, 12 so wie in Figur 3 schematisch gezeigt eine synthetisierte Applikation 13, indem er aus einander entsprechenden Programmsequenzen 111/121,112/122 und 113/123 der bereitgestellten Ausgangsvarianten 11, 12 jeweils diejenigen Programmsequenzen 111,122, 113 auswählt, die die jeweilige Funktion effizienter realisieren als die entsprechenden Programmsequenzen 121,112,123 der jeweils anderen Ausgangsvariante 12,11. Als Ergebnis dieses integrierten Lade- und Syntheseprozesses existiert im Arbeitsspeicher 5 die synthetisierte Applikation 13, die die Programmsequenz 111 der CLASS-Ausgangsvariante 11, die Programmsequenz 122 der CAP-Ausgangsvariante 12 und die Programmsequenz 113 der CLASS-Ausgangsvariante 11 umfasst. Die Applikationen 11,12 und 13 sind jeweils funktional gleichwirkend, so dass die synthetisierte Applikation 13 die effizienteste Realisierung der von den Ausgangsvarianten 11, 12 jeweils bereitgestellten Funktionalitäten repräsentiert.

Die im Arbeitsspeicher 5 vorliegende synthetisierte Applikation 13 kann zur mehrmaligen Interpretation ohne erneute Synthese im EEPROM-Speicher 4 der Chipkarte 1 abgespeichert werden. Die Interpretation der Applikation 13 durch den Interpreter 10 ist jedoch nur dann möglich, wenn der Interpreter 10 in der Lage ist, alle Operationscodesprachen zu interpretieren, die in der Applikation 13 vorliegen, im vorliegenden Beispiel also das Java-CLASS-Format und das Java-CAP-Format. Dies ist dadurch erreichbar, dass der Interpreter 10 Zugriff auf je eine Operationscodetabelle 14, 15 für jede der zu interpretierenden Operationscodesprachen besitzt. Beim Interpretieren der synthetisierten Applikation 13 muss der Interpreter 10 also beide Operationscodetabellen 14,15 verwenden, da auch beide Operationscodesprachen der Ausgangsvarianten 11,12 in der Applikation 13 vorliegen. Bei dem Beispiel der Figur 4 verwendet der Interpreter 10 zur korrekten Interpretation der synthetisierten Applikation 13 also die Operationscodetabelle 14 für die Programmsequenzen 111 und 113, während für die Programmsequenz 122 die Operationscodetabelle 15 zu verwenden ist.

Die Erkennung, welche der zur Verfügung stehenden Operationscodetabellen 14, 15 der Interpreter 10 für eine zu interpretierende Programmsequenz 111,122,113 der synthetisierten Applikation 13 verwenden muss, kann einerseits über reservierte Sprachcodes 16 gesteuert werden, die von dem Lader 8 im Rahmen des Syntheseprozesses in die synthetisierte Applikation 13 eingefügt werden. Die Sprachcodes 16 werden so in den Programmcode der synthetisierten Applikation 13 eingebracht, dass der Interpreter 10 bei einem Wechsel der zu interpretierenden Operationscodesprache innerhalb der synthetisierten Applikation 13 die zukünftig zu verwendende Operationscodetabelle 14, 15 entnehmen kann. So kann z. B. für jede Operationscodesprache, die der Interpreter 10 interpretieren kann, ein eigener Sprachcode 16 definiert werden, oder es kann insbesondere bei der Verwendung von lediglich zwei verschiedenen Operationscodesprachen ein Sprachcode 16 verwendet werden, der lediglich das Umschalten auf die jeweils andere, gerade nicht verwendete Operationscodetabelle 14, 15 anzeigt. Hierbei muss jedoch eine der Operationscodesprachen als diejenige festgelegt werden, die beim Start einer synthetisierten Applikation 13 standardmäßig zu verwenden ist.

Andererseits kann die Information über die zu verwendende Operationscodetabelle in den Strukturinformationen des Java-Programmcodes der synthetisierten Applikation 13 codiert werden. Im Hinblick auf den in Methoden strukturierten Java-Programmcode umfasst die interne Struktur eine Methode den eigentlichen Programmcode sowie zu dessen Interpretation benötigte Verwaltungsinformation. Der Java-Programmcode wird beim Ladevorgang in diese interne Struktur umgewandelt, die dann auch eine Information über die entsprechend zu verwendende Operationscodetabelle 14,15 umfasst. Beim Abarbeiten einer Java-Methode muss der Interpreter 10 - oder allgemein die virtuelle Maschine 9 - die Verwaltungsinformation ohnehin auswerten und kann dann auf die richtige Operationscodetabelle 14, 15 umschalten. Beim Aufruf einer Methode hinterlegt der Interpreter 10 die Verwaltungsinformationen in einem "Stack-Frame" des Interpreter-Stacks. Neben der üblichen Information des Stack-Frames, wie z. B. lokale Variablen, Operanden oder Rücksprungadressen, kann dort dann auch eine Information über die aktuell zu verwendende Operationscodetabelle 14, 15 und/oder die vorher verwendete Operationscodetabelle 14,15 zum Rückschalten hinterlegt werden.

Damit der Interpreter 10 eine synthetisierte Applikation 13, die verschiedene Operationscodesprachen umfasst, konfliktfrei ausführen kann, ist es sinnvoll, das Laufzeitverhalten für die zu interpretierenden Operationscodesprachen zu harmonisieren bzw. die Objektstrukturen kompatibel vorzusehen. Die Objektstruktur definiert Klassen- und/oder Schnittstellenspezifikationen und ist die Basis eines Java-Programrns. Durch die Verwendung einer einheitlichen Objektstruktur für die jeweiligen Operationscodesprachen bzw. die in diesen Sprachen vorliegenden Ausgangsvarianten 11, 12 und ihre Programmsequenzen können Konflikte bei den Datenstrukturen und/ oder Schnittstellen ausgeschlossen werden. Statt einer einheitlichen Objektstruktur ist es aber auch denkbar, beim Zugriff auf eine Datenstruktur dynamisch zur Laufzeit eine Konvertierung der Daten durch den Interpreter 10 durchzuführen.

Die Möglichkeit, die Operationscodesprache während der Laufzeit dynamisch zu ändern, kann gezielt zur Optimierung des Speicherbedarfs bzw. des Laufzeitverhaltens einer Applikation 13 eingesetzt werden, indem jeweils die optimale Operationscodesprache für ein gegebenes Problem oder Teilproblem eingesetzt wird. Im Zusammenhang mit Java haben CLASS-Applikationen im Gegensatz zu CAP-Applikationen einen deutlich höheren Speicherverbrauch. Insofern kann es eine sinnvolle Strategie zum Bilden einer Applikation 13 sein, Instruktionen, Funktionen, Unterroutinen, Methoden oder dergleichen aus einer CAP-Ausgangsvariante in eine synthetisierte Applikation 13 zu übernehmen, solange man die zusätzlichen Funktionalitäten einer CLASS-Ausgangsvariante nicht benötigt. Genauso gut ist es auch möglich aus mehrere bereitgestellten Ausgangsvarianten 11, 12 keine synthetisierte Applikation 13 zu bilden, sondern lediglich eine dieser bereitgestellten Ausgangsvarianten 11,12 vollständig als auszuführende Applikation 13 auszuwählen, wenn diese den anderen bereitgestellten Ausgangsvarianten 11, 12 im Hinblick auf die Effizienzkriterien grundsätzlich zu bevorzugen ist.

Figur 5 zeigt eine zweite Ausführungsform der vorliegenden Erfindung, bei der alle Ausgangsvarianten 11, 12 in einer gemeinsamen Datei 17 vorliegen. Bei der in Figur 5 dargestellten Variante bildet nicht der Lader 8, sondern der Interpreter 10 die auszuführende Applikation 13. Der Lader 8 lädt lediglich die kombinierte Ausgangsvariante 17 in herkömmlicher Weise in den Arbeitsspeicher 5, wo der Interpreter 10 auf die kombinierte Ausgangsvariante 17 zugreifen kann. Der Interpreter 10 selektiert nun im Hinblick auf die vorgegebenen Kriterien vorteilhafte Programmsequenzen 111,122,113 und interpretiert jede der gewählten Programmsequenzen 111,122,113 unmittelbar, ohne eine zusammenhängende, synthetisierte Applikation zu bilden. Die synthetisierte Applikation existiert also nicht zusammenhängend im Speicher, sondern wird nur durch die Abarbeitungsreihenfolge der ausgewählten Programmsequenzen 111,122,113 repräsentiert. Gleichwohl ist es auch bei dieser Ausführungsform möglich, die synthetisierte Applikation 13 explizit zu bilden und für spätere Ausführungen im EEPROM-Speicher 4 abzuspeichern.

Bei der Interpretation der jeweiligen Programmsequenzen 111,122,113 kann der Interpreter 10 dann die Operationscodetabellen 14,15 verwenden, wobei es im Gegensatz zu der Ausführungsform der Figur 4 hier nicht unbedingt nötig ist, die Operationscodetabelle 14,15 anhand von Sprachcodes oder Strukturinformationen zu ermitteln, sofern der Interpreter 10 eine grundsätzliche Information darüber besitzt, in welcher Operationscodesprache die Ausgangsvarianten 11, 12 jeweils vorliegen.

## Patentansprüche

1. Verfahren zum Ausführen einer Applikation (13) auf einem portablen Datenträger (1) mit einem Prozessor (2), einem Speicher (5), einem vom Prozessor (2) ausführbaren Lader (8) und einen vom Prozessor (2) ausführbaren Interpreter (10), mit den folgenden Schritten in dem portablen Datenträger:
Bereitstellen (S1) von zumindest zwei in unterschiedlichen Operationscodesprachen vorliegenden ausführbaren Ausgangsvarianten (11,12) der Applikation (13);
Bilden (S2) einer auszuführenden Applikation (13) aus den zumindest zwei Ausgangsvarianten (11,12);
Interpretieren eines ersten Teils der Applikation, der in einer Ersten der Operationscodesprachen vorliegt;
Umschalten eines Modus für die erste Operationscodesprache auf einen Modus für eine Zweite der Operationscodesprachen; und
Interpretieren eines zweiten Teils der Applikation, der in der zweiten Operationscodesprache vorliegt; wobei
entweder beim Schritt des Bildens (S2) der auszuführenden Applikation (13) die auszuführende Applikation (13) von dem Lader (8) beim Laden der gebildeten Applikation (13) in den Speicher (5) aus den zumindest zwei Ausgangsvarianten (11, 12) gebildet wird,
oder beim Schritt des Bereitstellens (S1) der zumindest zwei Ausgangsvarianten (11, 12) die Ausgangsvarianten (11, 12) in den Speicher (5) geladen werden, und beim Schritt des Bildens (S2) der auszuführenden Applikation (13) die auszuführende Applikation (13) aus den im Speicher (5) bereitgestellten Ausgangsvarianten (11, 12) von dem Interpreter (10) gebildet wird.

2. Verfahren nach Anspruch 1, **dadurch gekennzeichnet, dass** beim Schritt des Bildens (S2) der auszuführenden Applikation die auszuführende Applikation (13) entweder schrittweise synthetisiert wird aus Programmsequenzen, die aus einander entsprechenden Programmsequenzen (111/121, 112/122,113/123) der zumindest zwei Ausgangsvarianten (11, 12) ausgewählt werden, oder eine der zumindest zwei Ausgangsvarianten (11, 12) als auszuführende Applikation (13) ausgewählt wird.

3. Verfahren nach Anspruch 2, **dadurch gekennzeichnet, dass** beim Schritt des Bildens der auszuführenden Applikation (13) durch das schrittweise Synthetisieren ausgewählter Programmsequenzen (111,122,113) diejenige Programmsequenz einer Ausgangsvariante (11, 12) als Programmsequenz (111,122,113) der zu bildenden Applikation (13) ausgewählt wird, die den entsprechenden Programmsequenzen (121,112,123) der anderen Ausgangsvarianten (11, 12) im Hinblick auf vorgegebene Kriterien überlegen ist.

4. Verfahren nach Anspruch 2, **dadurch gekennzeichnet, dass** beim Schritt des Bildens der auszuführenden Applikation (13) durch Auswählen einer Ausgangsvariante (11, 12) diejenige Ausgangsvariante (11, 12) als die auszuführende Applikation (13) ausgewählt wird, die den anderen Ausgangsvarianten (12, 11) im Hinblick auf vorgegebene Kriterien überlegen ist.

5. Verfahren nach Anspruch 3 oder 4, **dadurch gekennzeichnet, dass** die vorgegebenen Kriterien Speicherplatzverbrauch und/oder Laufzeit einer Programmsequenz (111,112,113,121,122,123) betreffen.

6. Verfahren nach Anspruch 5, **dadurch gekennzeichnet, dass** der Interpreter (10) Zugriff auf Operationscodetabellen (14, 15) für jede Operationscodesprache der zumindest zwei Ausgangsvarianten (11, 12) hat und beim Schritt des Interpretierens der gebildeten Applikation (13) jeweils die Operationscodetabelle (14,15) derjenigen Operationscodesprache verwendet wird, der eine zu interpretierende Programmsequenz (111,122,113) der auszuführenden Applikation (13) angehört.

7. Verfahren nach Anspruch 6, **dadurch gekennzeichnet, dass** beim Schritt des Ausführens (S3) der auszuführenden Applikation (13) zwischen zum Interpretieren von Programmsequenzen (111,122, 113) zu verwendenden Operationscodetabellen (14,15) umgeschaltet wird, wenn die zu interpretierende Operationscodesprache wechselt.

8. Verfahren nach Anspruch 6 oder 7, **dadurch gekennzeichnet, dass**
- beim Schritt des Bildens (S2) der auszuführenden Applikation (13) vorgegebene Sprachcodes (16) in die auszuführende Applikation (13) eingefügt werden, die die Operationscodesprache der jeweiligen Programmsequenz (111,122, 113) anzeigen; und
- beim Schritt des Ausführens (S3) der auszuführenden Applikation (13) zum Interpretieren einer Programmsequenz (111,122,113) die Operationscodetabelle (14, 15) der durch den jeweiligen Sprachcode (16) angezeigten Operationscodesprache verwendet wird.

9. Verfahren nach Anspruch 6 oder 7, **dadurch gekennzeichnet, dass** beim Schritt des Ausführens (S3) der auszuführenden Applikation (13) die zum Interpretieren einer Programmsequenz (111,122,113) zu verwendende Operationscodetabelle (14, 15) anhand einer Strukturinformation der Programmsequenz (111,122,113) bestimmt wird.

10. Verfahren nach Anspruch 1, **dadurch gekennzeichnet, dass** beim Schritt des Bildens (S2) der auszuführenden Applikation (13) Programmsequenzen (111,122,113) aus den zumindest zwei Ausgangsvarianten (11, 12) schrittweise ausgewählt und direkt von dem Interpreter (10) interpretiert werden.

11. Verfahren nach einem der Ansprüche 1 bis 10, **dadurch gekennzeichnet, dass** die unterschiedlichen Operationscodesprachen Java-Bytecode-Formate sind, wie z. B. ein Java-CLASS-Format und/oder ein Java-CAP-Format.

12. Verfahren nach Anspruch 11, **dadurch gekennzeichnet, dass** die zumindest zwei Ausgangsvarianten (11,12) einheitliche Objektstrukturen verwenden.

13. Verfahren nach einem der Ansprüche 1 bis 12, **dadurch gekennzeichnet, dass** beim Schritt des Ausführens (S3) der auszuführenden Applikation (13) für die Operationscodesprachen der auszuführenden Applikation (13) eine gemeinsame Speicherverwaltung verwendet wird.

14. Portabler Datenträger (1) mit einem Prozessor (2), **dadurch gekennzeichnet, dass** der Datenträger (1) eine Vorrichtung umfasst, die eingerichtet ist, eine auszuführende Applikation (13) aus zumindest zwei in unterschiedlichen Operationscodesprachen vorliegenden ausführbaren Ausgangsvarianten (11, 12) der Applikation (13) zu bilden und auszuführen;
die Vorrichtung einen vom Prozessor (2) ausführbaren Interpreter (10) umfasst, der eingerichtet ist, die unterschiedlichen Operationscodesprachen der zumindest zwei Ausgangsvarianten (11, 12) zu interpretieren, wobei der Interpreter eingerichtet ist zum Umschalten eines Modus für eine Erste der Operationscodesprachen auf einen Modus für eine Zweite der Operationscodesprachen;
der Datenträger (1) einen Speicher (5) umfasst und die Vorrichtung einen vom Prozessor (2) ausführbaren Lader (8) umfasst, wobei
der Lader eingerichtet ist die auszuführende Applikation (13) beim Laden der auszuführenden Applikation (13) in den Speicher (5) aus den zumindest zwei Ausgangsvarianten (11, 12) zu bilden oder
der Lader eingerichtet ist, die zumindest zwei Ausgangsvarianten (11, 12) in den Speicher (5) zu laden, und der Interpreter (10) eingerichtet ist, die auszuführende Applikation (13) aus den im Speicher (5) bereitgestellten Ausgangsvarianten (11, 12) zu bilden.

15. Portabler Datenträger (1) nach Anspruch 14, der vorzugsweise eine Chipkarte, eine sichere Multimediakarte, ein USB-Speichermedium oder eine Mobilfunkkarte ist, eingerichtet zur Ausführung eines Verfahrens nach einem der Ansprüche 1 bis 13.

## Claims

1. A method for executing an application (13) on a portable data carrier (1) with a processor (2), a memory (5), a loader (8) executable by the processor (2) and an interpreter (10) executable by the processor (2), with the following steps in the portable data carrier:
supplying (S1) of at least two executable initial variants (11, 12) of the application (13) which are present in at least two different operation code languages;
creating (S2) of an application (13) to be executed from the at least two initial variants (11, 12);
interpreting of a first portion of the application which is present in a first one of the operation code languages;
switching of a mode for the first operation code language to a mode for a second one of the operation code languages; and
interpreting of a second portion of the application which is present in the second operation code language; wherein
either, upon the step of creating (S2) the application (13) to be executed, the application (13) to be executed is created by the loader (8) upon loading the created application (13) into the memory (5) from the at least two initial variants (11, 12),
or, upon the step of supplying (S1) of the at least two initial variants (11, 12), the initial variants (11, 12) are loaded into the memory (5), and, upon the step of creating (S2) the application (13) to be executed, the application (13) to be executed is created by the interpreter (10) from the at least two initial variants (11, 12) supplied in the memory (5).

2. The method according to claim 1, **characterized in that** upon the step of creating (S2) the application to be executed, the application (13) to be executed is either synthesized stepwise from program sequences selected from mutually corresponding program sequences (111/121, 112/122, 113/123) of the at least two initial variants (11, 12), or one of the at least two initial variants (11, 12) is selected as application (13) to be executed.

3. The method according to claim 2, **characterized in that** upon the step of creating the application (13) to be executed by the stepwise synthesizing of selected program sequences (111,122,113) such program sequence of a initial variant (11, 12) is selected as program sequence (111, 122, 113) of the application (13) to be created, which is superior to the corresponding program sequences (121, 112, 123) of the other initial variants (11, 12) in view of predetermined criteria.

4. The method according to claim 2, **characterized in that** upon the step of creating the application (13) to be executed by selecting an initial variant (11, 12) such initial variant (11, 12) is selected as the application (13) to be executed which is superior to the other initial variants (12, 11) in view of predetermined criteria.

5. The method according to claim 3 or 4, **characterized in that** the predetermined criteria concern memory consumption and/ or runtime of a program sequence (111, 112, 113, 121, 122, 123).

6. The method according to claim 5, **characterized in that** the interpreter (10) has access to operation code tables (14, 15) for each operation code language of the at least two initial variants (11, 12) and upon the step of interpreting of the created application (13) respectively the operation code table (14, 15) of such operation code language is used to which a program sequence (111, 122, 113) of the application (13) to be executed belongs.

7. The method according to claim 6, **characterized in that** upon the step of executing (S3) the application (13) to be executed switching takes place between operation code tables (14, 15) to be used for interpreting program sequences (111, 122, 113) upon a change of the operation code language to be interpreted.

8. The method according to claim 6 or 7, **characterized in that**
- upon the step of creating (S2) the application (13) to be executed predetermined language codes (16) are incorporated in the application (13) to be executed which indicate the operation code language of the respective program sequence (111, 122, 113); and
- upon the step of executing (S3) of the application (13) to be executed for interpreting a program sequence (111, 122, 113), the operation code table (14, 15) of such operation code language is used which is indicated by the respective language code (16).

9. The method according to claim 6 or 7, **characterized in that**, upon the step of executing (S3) the application (13) to be executed, the operation code table (14, 15) to be used for interpreting a program sequence (111, 122, 113) is determined by means of a structural information item of the program sequence (111,122, 113).

10. The method according to claim 1, **characterized in that**, upon the step of creating (S2) the application (13) to be executed, program sequences (111, 122, 113) of the at least two initial variants (11, 12) are selected stepwise and interpreted directly by the interpreter (10).

11. The method according to any of the claims 1 to 10, **characterized in that** the different operation code languages are Java byte code formats, such as e.g. a Java CLASS format and/ or a Java CAP format.

12. The method according to claim 11, **characterized in that** the at least two initial variants (11, 12) use uniform object structures.

13. The method according to any of the claims 1 to 12, **characterized in that**, upon the step of executing (S3) the application (13) to be executed, a common memory management is used for the operation code languages of the application (13) to be executed.

14. A portable data carrier (1) with a processor (2), **characterized in that** the data carrier (1) comprises a device which is adapted to create and execute an application (13) to be executed from at least two executable initial variants (11,12) of the application (13) that are present in different operation code languages;
the device comprises an interpreter (10) that is executable by the processor (2) and is adapted to interpret the different operation code languages of the at least two initial variants (11, 12), wherein the interpreter is adapted to switch a mode for a first one of the operation code languages to a mode for a second one of the operation code languages;
the data carrier (1) comprises a memory (5) and the device comprises a loader (8) executable by the processor (2), wherein
the loader is adapted to create the application (13) to be executed from the at least two initial variants (11, 12) upon loading the application (13) to be executed into the memory (5) or
the loader is adapted to load the at least two initial variants (11, 12) into the memory (5), and the interpreter (10) is adapted to create the application (13) to be executed from the initial variants (11, 12) supplied in the memory (5).

15. A portable data carrier (1) according to claim 14, which is preferably a chip card, a secure multimedia card, a USB storage medium or a mobile communication card, adapted to execute a method according to any of the claims 1 to 13.

## Revendications

1. Procédé d'exécution d'une application (13) sur un support de données portable (1) comportant un processeur (2), une mémoire (5), un chargeur (8) exécutable par le processeur (2) et un interpréteur (10) exécutable par le processeur (2), avec les étapes suivantes dans le support de données portable:
mise à disposition (S1) d'au moins deux variantes initiales (11, 12) exécutables de l'application (13) se trouvant dans deux langages de code opération différents;
génération (S2), à partir des au moins deux variantes initiales (11, 12), d'une application (13) à exécuter;
interprétation d'une première partie de l'application (13), ladite première partie se trouvant dans un premier des langages de code opération ;
commutation d'un mode pour le premier langage de code opération à un mode pour un second des langages de code opération; et
interprétation d'une seconde partie de l'application (13), ladite seconde partie se trouvant dans le second langage de code opération;
soit lors de l'étape de la génération (S2) de l'application (13) à exécuter, l'application (13) à exécuter étant générée par le chargeur (8), à partir des au moins deux variantes initiales (11, 12), dans la mémoire (5) lors du chargement de l'application (13) générée,
soit lors de l'étape de la mise à disposition (S1) des au moins deux variantes initiales (11, 12), les variantes initiales (11, 12) étant chargées dans la mémoire (5), et, lors de l'étape de la génération (S2) de l'application (13) à exécuter, l'application (13) à exécuter étant générée par l'interpréteur (10) à partir des variantes initiales (11, 12) mises à disposition dans la mémoire (5).

2. Procédé selon la revendication 1, **caractérisé en ce que**, lors de l'étape de la génération (S2) de l'application (13) à exécuter, l'application (13) à exécuter est soit synthétisée pas à pas à partir de séquences de programme qui sont sélectionnées à partir de séquences de programme (111/121, 112/122, 113/123) correspondant entre elles des au moins deux variantes initiales (11, 12), soit une des au moins deux variantes initiales (11, 12) est sélectionnée en tant qu'application (13) à exécuter.

3. Procédé selon la revendication 2, **caractérisé en ce que**, lors de l'étape de la génération, par la synthétisation pas à pas de séquences de programme sélectionnées (111, 122, 113), de l'application (13) à exécuter, c'est la séquence de programme d'une variante initiale (11, 12) qui est supérieure aux séquences de programme (121, 112, 123) correspondantes des autres variantes initiales (11, 12) qui est, au regard de critères donnés, sélectionnée en tant que séquence de programme (111, 122, 113) de l'application (13) à générer.

4. Procédé selon la revendication 2, **caractérisé en ce que**, lors de l'étape de la génération, par la sélection d'une variante initiale (11, 12), de l'application (13) à exécuter, c'est la variante initiale (11, 12) qui est, au regard de critères donnés, supérieure aux autres variantes initiales (11, 12), qui est sélectionnée en tant que l'application (13) à exécuter.

5. Procédé selon la revendication 3 ou 4, **caractérisé en ce que** les critères donnés concernent l'occupation d'espace mémoire et/ou la durée d'une séquence de programme (111, 112, 113, 121, 122, 123).

6. Procédé selon la revendication 5, **caractérisé en ce que** l'interpréteur (10) a accès à des tableaux de codes opération (14, 15) pour chaque langage de code opération des au moins deux variantes initiales (11, 12) et **en ce que**, lors de l'étape de l'interprétation de l'application (13) générée, c'est respectivement le tableau de code opération (14, 15) du langage de code opération auquel appartient une séquence de programme (111, 122, 113) à interpréter de l'application (13) à exécuter qui est utilisé.

7. Procédé selon la revendication 6, **caractérisé en ce que**, lors de l'étape de l'exécution (S3) de l'application (13) à exécuter, quand le langage de code opération à interpréter change, il est commuté entre des tableaux de codes opération (14, 15) à utiliser pour l'interprétation des séquences de programme (111, 122, 113).

8. Procédé selon la revendication 6 ou 7, **caractérisé en ce que**,
- lors de l'étape de la génération (S2) de l'application (13) à exécuter, des codes de langage (16) donnés qui indiquent le langage de code opération de la séquence de programme (111, 122, 113) respective sont insérés dans l'application (13) à exécuter; et
- lors de l'étape de l'exécution (S3) de l'application (13) à exécuter, pour l'interprétation d'une séquence de programme (111, 122, 113), le tableau de code opération (14, 15) du langage de code opération indiqué par le code de langage (16) respectif est utilisé.

9. Procédé selon la revendication 6 ou 7, **caractérisé en ce que**, lors de l'étape de l'exécution (S3) de l'application (13) à exécuter, le tableau de code opération (14, 15) à utiliser pour l'interprétation d'une séquence de programme (111, 122, 113) est déterminé à l'aide d'une information de structure de la séquence de programme (111, 122, 113).

10. Procédé selon la revendication 1, **caractérisé en ce que**, lors de l'étape de la génération (S2) de l'application (13) à exécuter, des séquences de programme (111, 122, 113) provenant des au moins deux variantes initiales (11, 12) sont sélectionnées pas à pas et interprétées directement par l'interpréteur (10).

11. Procédé selon une des revendications de 1 à 10, **caractérisé en ce que** les différents langages de code opération sont des formats Java bytecode tels que p.ex. un format Java-CLASS et/ou un format Java-CAP.

12. Procédé selon la revendication 11, **caractérisé en ce que** les au moins deux variantes initiales (11, 12) utilisent des structures d'objets uniformes.

13. Procédé selon une des revendications de 1 à 12, **caractérisé en ce que**, lors de l'étape de l'exécution (S3) de l'application (13) à exécuter, une gestion commune de mémoire est utilisée pour les langages de code opération de l'application (13) à exécuter.

14. Support de données portable (1) comprenant un processeur (2),
**caractérisé en ce que** le support de données (1) comporte un dispositif qui est configuré pour générer et exécuter, à partir d'au moins deux variantes initiales (11, 12) exécutables de l'application (13) se trouvant en différents langages de code opération, une application (13) à exécuter;
le dispositif comporte un interpréteur (10) exécutable par le processeur (2), qui est configuré pour interpréter les différents langages de code opération des au moins deux variantes initiales (11, 12), l'interpréteur étant configuré pour commuter un mode pour un premier des langages de code opération vers un mode pour un second des langages de code opération;
le support de données (1) comporte une mémoire (5) et le dispositif comporte un chargeur (8) exécutable par le processeur (2),
le chargeur étant configuré pour générer, lors du chargement de l'application (13) à exécuter dans la mémoire (5), à partir des au moins deux variantes initiales (11, 12), l'application (13) à exécuter, ou
le chargeur étant configuré pour charger dans la mémoire (5) les au moins deux variantes initiales (11, 12), et l'interpréteur (10) étant configuré pour générer, à partir des variantes initiales (11, 12) mises à disposition dans la mémoire (5), l'application (13) à exécuter.

15. Support de données portable (1) selon la revendication 14, qui est de préférence une carte à puce, une carte multimédia sûre, un support USB ou une carte de téléphonie mobile, configuré pour l'exécution d'un procédé selon une des revendications de 1 à 13.
